# EUROPEAN PATENT SPECIFICATION

(11) **EP 0 828 394 B1**
(45) Date of publication and mention of the grant of the patent: **03.05.2006**
(21) Application number: 96308944.6
(22) Date of filing: 10.12.1996
(51) Int. Cl.: H04N 7/52, H04N 7/06

(54) **A device and method for converting data transfer rate in communication of digital audio/video data**
Vorrichtung und Verfahren zur Umwandlung von Datentransferraten für digitale Audio- und Videodaten
Dispositif et méthode pour convertir le taux de transmission de données pour les données numériques d'audio et de vidéo

(30) Priority: 06.09.1996 KR 9638700
(43) Date of publication of application: 11.03.1998
(73) Proprietor: SAMSUNG ELECTRONICS CO., LTD., Suwon-City, Kyungki-do (KR)
(72) Inventor: Sung, Kwan-soo, Socho-gu, Seoul (KR)
(74) Representative: Chugg, David John

(56) References cited:
- BLOKS R H J: "The IEEE-1394 high speed serial bus" PHILIPS JOURNAL OF RESEARCH,ELSEVIER, AMSTERDAM,NL, vol. 50, no. 1, 1996, pages 209-216, XP004008212 ISSN: 0165-5817
- KUNZMAN A J ET AL: "1394 HIGH PERFORMANCE SERIAL BUS: THE DIGITAL INTERFACE FOR ATV" IEEE TRANSACTIONS ON CONSUMER ELECTRONICS,US,IEEE INC. NEW YORK, vol. 41, no. 3, 1 August 1995 (1995-08-01), pages 893-900, XP000539552 ISSN: 0098-3063
- HOFFMAN G ET AL: "IEEE 1394: A UBIQUITOUS BUS" DIGEST OF PAPERS OF THE COMPUTER SOCIETY COMPUTER CONFERENCE (SPRING) COMPCON,US,LOS ALAMITOS, IEEE COMP. SOC. PRESS, vol. CONF. 40, 5 March 1995 (1995-03-05), pages 334-338, XP000545446 ISBN: 0-7803-2657-1

## Description

This invention relates to a communication device in isochronous communication mode. More specifically, when digital audio/video data according to the standard definition (SD) is transmitted in isochronous mode, the invention provides uniform data transfer rate in a fixed margin, by means of controlling the insert locations of empty packets.

Development of computer technology in recent years introduced a digital multimedia era through linking computers with electric home appliances. The computer technology comprises (a) improved technology of various digital multimedia equipments such as a digital video cassette recorder (VCR) and digital camcorder and (b) interface technology which enables the multimedia equipments to link with each other. One of the most well-known interface technologies is IEEE 1394 interface. The IEEE 1394 interface is a standard bus interface definition for network personal computers, portable computers and other digital systems which operate independently.

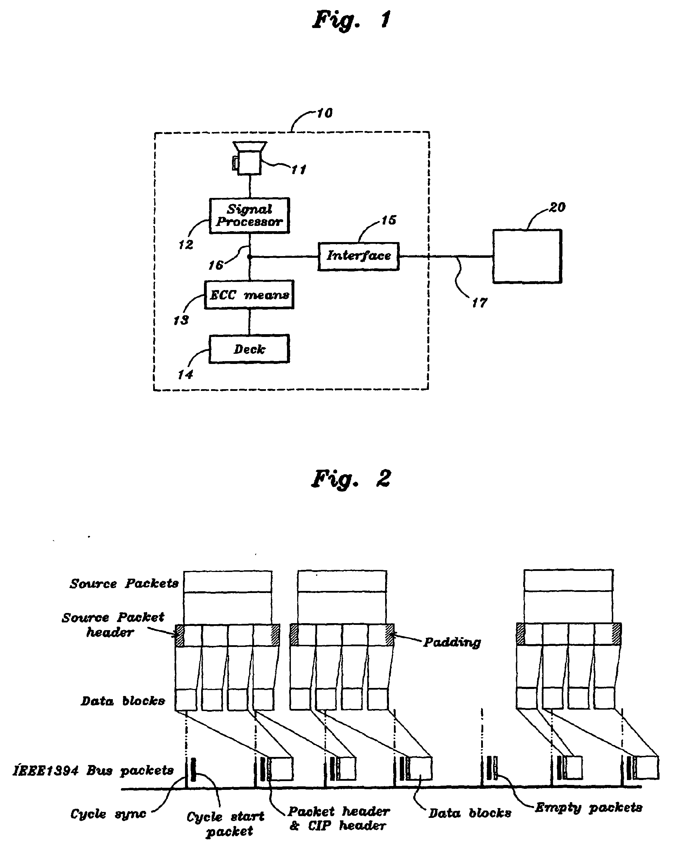

Figure 1 is a block diagram of a multimedia system for data-communication with a common digital camcorder and the IEEE 1394 interface. The multimedia system comprises (1) a camera 11 for taking a real world picture and generating audio/video signals, (2) a signal processor 12 for processing the signals and producing audio/video information, (3) an error correction code (ECC) means 13 for appending an error correcting code to the information, (4) a deck 14 for storing the information, (5) an interface 15 for interfacing another multimedia system 20 to communicate mutually and (6) a communicating means 17, usually IEEE 1394 for performing digital communication between the multimedia systems. Internal bus 16 performs the data communication between the components of the multimedia system.

When a frame is transmitted on the internal bus for a given bus interval time, the internal bus exhibits a high transfer rate at some specific parts in the bus interval time and stays idle at the other parts in the bus interval time for efficiency purposes during the audio/video data transmission. Such a characteristic is well known to those skilled in this art.

Figure 2 shows a model of transmission of a stream of source packets from one digital device to another digital device. A source may be split into 1, 2, 4 or 8 data blocks, and zero or more data blocks are contained in a IEEE 1394 isochronous packet. A receiver of the packet collects the data blocks in the isochronous packet and combines them to reconstruct the source packet to send to the application.

The source packets should comply with the specification and the definitions for IEEE 1394 and DVC DIF (digital video cassette digital interface), to be transmitted from one digital device (e.g. a digital camcorder 10 shown in Figure 1) to another digital device (e.g. a multimedia device 20 shown in Figure 1). However the specifications and the definitions are so common to those skilled in this art that this invention will be allowed to show them in brief.

[Definition 1] Data transmission according to Standard Definition-Video Cassette Recorder Digital InterFace (SD-VCR DIF) should apply with the following time conditions.
1. Start timing information of one frame should be transmitted into the receiver. The start timing information is carried in CIP header in the source packet of the frame, as a time stamp information. The CIP header is placed at the beginning of the data field of an IEEE 1394 isochronous packet and contains information on the type of the real time data contained in the data field following the CIP header.
2. The data block n of a video frame M should be transmitted in a packet which meets the following conditions. (n=0 ... K-1) $Packet_arrival_time_L \leq {T}_{n}$
Tₙ - Transmission_delay_limit ≤ Packet_arrival_time_F where
Tₙ is the nominal timing for data block n, ${T}_{n} = {T}_{M} - ( {T}_{M + 1} - {T}_{M} ) ∗ n / K$

| | |
|---|---|
| Packet_arrival_time_L: | The cycle time when the last bit of the packet which includes data block n arrives at the receiver. |
| Packet_arrival_time_F: | The cycle time when the first bit of the packet which includes data block n arrives at the receiver. |

T_{M} is the time stamp for video frame M.
Transmission_delay_Limit = 450 µs
K is the number of source packets in a video frame. $K = 250 ( 525 - 60 system )$ $K = 300 ( 625 - 50 system )$

The above is about the time condition for frame transmission and more detailed specifications are shown in the Digital Interface and the CIP Header in the Blue Book of SD-VCR, published in 12, 1995.

From the above definition a fact is noticed that the 250 or 300 source packets should be uniformly distributed in a fixed margin.

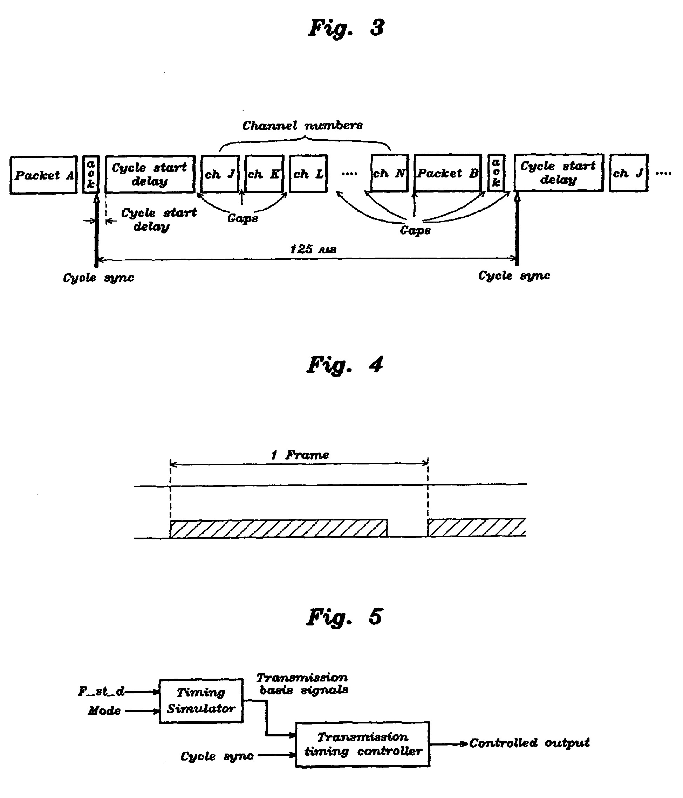

[Definition 2] Isochronous transmission of IEEE 1394 performs by transmitting the isochronous packets, responding to the cycle sync at every 125 *µ*s as shown in Figure 3. Detailed specifications with relation to this are shown in IEEE 1394 published in 1995.

Figure 4 shows the state of the internal bus 16 during transmission of the data in one frame. As foresaid, the internal bus of the digital camcorder 10 usually has high transfer rate at only specific parts in the frame.

A fact is derived from the two definitions.

It is noticed that in the case of 525-60 system (i.e. National Television System Committee: NTSC), the number of source packets is 250 per frame and the number of cycle sync per frame is approximately 266.9. Accordingly in the 525-60 system, empty packets without data should be transmitted to 16 or 17 isochronous cycles, in order to transmit image informations of a frame through the IEEE 1394 bus. Thereby, the timing of the internal bus of the digital camcorder should synchronize with the output timing through IEEE 1394 bus. At this time the empty packet insertion is determined on the ground of the [definition 1, 2].

Consequently, to make the transfer rate of the internal bus of a digital device (e.g. a camcorder) and the transfer rate of IEEE 1394 bus correspond under the [definition 1, 2], the steps of buffering transmission data using memory and controlling the output timing of the transmission data from the memory are required.

The paper "The IEEE-1394 HIGH SPEED SERIAL BUS" published in July 1996 in the Philips Journal of Research, Vol.50, No.1, pages 209-216 describes use of the IEEE-1394 bus as a digital interface connecting a set-top box to an ordinary TV set, digital video recorder and other associated devices. An isochronous data packing and processing mechanism is explained in which common isochronous protocol (CIP) headers are added to data in the A/V layer to identify the method used by the transmitter to pack the data, to provide a data type identifier and data type dependent flags. Use of the CIP headers enables a generic receiver to unpack the received data without specific knowledge of what the data type is itself and deliver it with proper timing to a receiver application.

The paper "1394 HIGH PERFORMANCE SERIAL BUS: THE DIGIAL INTERFACE FOR ATV" published in August 1995 in the IEEE transactions on consumer electronics at Vol.1, No.3, pages 893-900 and describes the use of the IEEE 1394 bus as an interface between a set-top box, a television, a DVCR or camcorder using MPEG-transport streams, computers and other devices.

The paper "IEEE 1394: A UBIQUITOUS BUS" published in March 1995 in the Digest of papers of the Computer Society Spring Conference, Vol.40, pages 334-338 and describes the use of the IEEE 1394 bus in terms of general topology and protocol.

It is an aim of embodiments of the present invention to provide transmission in accordance with definitions of the SD-format digital interface in communication devices with a isochronous communication mode such as a digital data transmission/reception protocol as defined by IEEE 1394.

According to an aspect of the present invention, there is provided a device for converting data transfer rate in communication of digital audio/video data, which transmits a stream of source packets from a first digital device to a second digital device according to transmission specifications in isochronous mode, the device comprising an align means for deciding insert positions of empty packets to convert transmission timing of an internal bus in the first digital device into a fixed timing according to transmission specifications; the device characterised in that the align means comprises: a timing simulator for receiving a first set of signals (F_st_d) and mode signals (MODE) to indicate occurrence of transmission basis signals for transmitting the stream of the source packets and outputting the transmission basis signals; and a transmission timing controller for receiving the transmission basis signals and transmitting packets at every cycle sync which occurs after a fixed length of time, according to fixed rules, and wherein the fixed rules specify transmission timing of source packets for a cycle sync in such a way that when a cycle sync occurs in a transmission basis signal interval, a source packet with data is transmitted at the cycle sync while when two cycle syncs occur in a transmission basis signal interval, a source packet with data is transmitted at only one of the two cycle syncs and an empty packet without data is transmitted at the other cycle sync.

The first set of signals (F_st_d) preferably occur after delaying a first signal showing the beginning of the transmission of the first data in a frame of the inner bus in the first device for a fixed length of time.

The mode signals preferably show whether the signals are in NTSC or PAL mode.

The fixed length of time may be 125 µs.

The delayed time is preferably for filling the memory with data to buffer the transmission data and determined by operators.

The cycle of transmission basis signal in NTSC mode preferably has a cycle interval of a frame divided into 250.

The cycle of transmission basis signal in PAL mode preferably has a cycle interval of a frame divided into 300.

The transmission specification is preferably IEEE 1394.

According to another aspect of the present invention, there is provided a method for converting data transfer rate in communication of digital audio/video data, which transmits a stream of source packets from a first digital device to a second digital device according to transmission specification in isochronous mode, comprising the steps of: (1) receiving a first set of signals and mode signals to indicate occurrence of transmission basis signals for transmitting the stream of the source packets, and outputting the transmission basis signals; and (2) receiving the transmission basis signals and transmitting packets at every cycle sync, according to fixed rules, wherein the fixed rules specify transmission timing of source packet for a cycle sync in the manner of that when a cycle sync occurs in a transmission basis signal, a source packet with data is transmitted at the cycle sync while when two cycle syncs occur in a transmission basis signal, a source packet with data is transmitted at only one of the two cycle sync and an empty packet without data at the other cycle sync.

The first set of signals preferably occur after delaying a first signal showing the beginning of the transmission of the first data in a frame of the inner bus in the first device for a fixed length of time.

The mode signals preferably show whether the signals are in NTSC or PAL mode.

Preferably the fixed length of time is 125 µs.

The delayed time is preferably for filling the memory with a transmission data to buffer the transmission data and determined by operators.

The cycle of transmission basis signal in the case of NTSC mode preferably has a cycle interval of a frame divided into 250.

The cycle of transmission basis signal in the case of PAL mode preferably has a cycle interval of a frame divided into 300.

Preferably, the transmission specification is IEEE 1394.

For a better understanding of the invention, and to show how embodiments of the same may be carried into effect, reference will now be made, by way of example, to the accompanying diagrammatic drawings, in which:
Figure 1 is a block diagram of a multimedia system for data-communication with a common digital camcorder and the IEEE 1394 interface;
Figure 2 is a model of transmission of a stream of source packets from a digital device;
Figure 3 is a timing chart of cycle structure according to IEEE 1394;
Figure 4 is a timing chart of the state of the internal bus 16 during transmission of the data in one frame;
Figure 5 is a block diagram of the device for converting data transfer rate in communication of digital audio/video data;
Figure 6 is a timing chart of operation of the timing simulator; and
Figure 7 is a timing chart of operation of the transmission timing controller.

Referring to Figure 5, the embodiment of the invention comprises a timing simulator and a transmission timing controller. The timing simulator receives F_st_d signals which delay F_st signal showing the beginning of the transmission of the first data in a frame of the internal bus of the camcorder for a fixed length of time and mode signals showing whether the signals are in NTSC mode or in PAL mode. The timing simulator outputs transmission basis signals in accordance with the F_st_d signals and the mode signals. The transmission timing controller receives the transmission basis signals and transmits packets at every cycle sync, in such a way that when a cycle sync occurs in a transmission basis signal interval, a source packet with data is transmitted at the cycle sync while when two cycle syncs occur in a transmission basis signal interval, a source packet with data is transmitted at only one of the two cycle sync and a empty packet without data is transmitted at the other cycle sync.

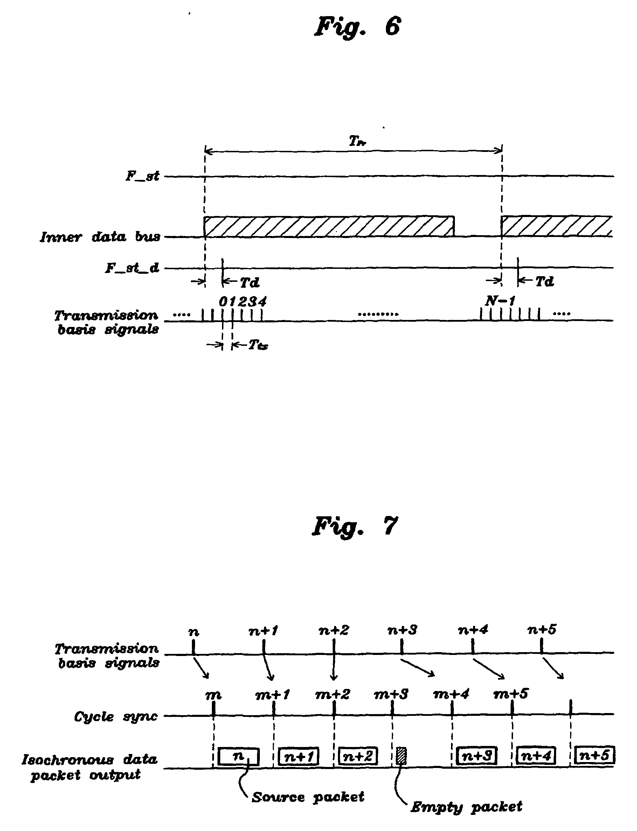

Referring to Figure 6, the timing simulator outputs signals at every Ttx interval in accordance with the mode (NTSC mode or PAL mode). Ttx represents a time fragment of a frame divided into 250 or 300. Td in Figure 6 is seen time delay for filling the memory with transmission data to buffer the transmission data. Operators may determine the length of time delay.

The cycle of the transmission signal is 133.5 µs in 525-60 system (NTSC system) and is 133.3 µs in 625-60 system (PAL system). In both systems the cycle of the transmission signal is longer than the cycle of the cycle sync, 125 µs. Therefore one or two cycle syncs shall exist in a transmission basis signal. Referring to Figure 7 at the first cycle sync after the transmission basis signal n following the F_st_d, the source packet n is transmitted. At the first cycle sync after the transmission basis signal n+2, the source packet n+2 is transmitted and at the second cycle sync (shown as m+3) after the transmission basis signal n+2, an empty packet is transmitted. In this manner, the invention can control the data distribution in a fixed margin and provide a uniform data transfer rate as defined in SD-VCR DIF.

As aforesaid, the device for converting data transfer rate in communication of digital audio/video data can overcome the different data transfer rates of the internal bus of the digital device (camcorder) and IEEE 1394 bus, thereby the device can satisfy the specifications for SD-format digital interface.

While there have been shown what are presently considered to be preferred embodiments of the invention, it will be apparent to those skilled in the art that various changes and modifications can be made herein without departing from the scope of the invention as defined by the appended claims.

## Claims

1. A device for converting data transfer rate in communication of digital audio/video data, which transmits a stream of source packets from a first digital device to a second digital device according to transmission specifications in isochronous mode, the device comprising an align means for deciding insert positions of empty packets to convert transmission timing of an internal bus in the first digital device into a fixed timing according to transmission specifications; the device **characterised in that** the align means comprises:
a timing simulator for receiving a first set of signals (F_st_d) and mode signals (MODE) to indicate occurrence of transmission basis signals for transmitting the stream of the source packets and outputting the transmission basis signals; and
a transmission timing controller for receiving the transmission basis signals and transmitting packets at every cycle sync which occurs after a fixed length of time, according to fixed rules,
and wherein the fixed rules specify transmission timing of source packets for a cycle sync in such a way that when a cycle sync occurs in a transmission basis signal interval, a source packet with data is transmitted at the cycle sync while when two cycle syncs occur in a transmission basis signal interval, a source packet with data is transmitted at only one of the two cycle syncs and an empty packet without data is transmitted at the other cycle sync.

2. The device of claim 1, wherein the first set of signals (F_st_d) occur after delaying a first signal showing the beginning of the transmission of the first data in a frame of the inner bus in the first device for a fixed length of time.

3. The device of claim 2, wherein the mode signals show whether the signals are in NTSC mode.

4. The device of claim 2 or 3, wherein the mode signals show whether the signals are in PAL mode.

5. The device of any of claims 2 to 4, wherein the fixed length of time is 125 µs.

6. The device of claim 2 or any of claims 3 to 5 as appendant thereto, wherein the delayed time is for filling the memory with data to buffer the transmission data and determined by operators.

7. The device of claim 1, wherein the cycle of transmission basis signal in NTSC mode has a cycle interval of a frame divided into 250.

8. The device of claim 1, wherein the cycle of transmission basis signal in PAL mode has a cycle interval of a frame divided into 300.

9. The device of any of the preceding claims, wherein the transmission specification is IEEE 1394.

10. A method for converting data transfer rate in communication of digital audio/video data, which transmits a stream of source packets from a first digital device to a second digital device according to transmission specification in isochronous mode, comprising the steps of:
(1) receiving a first set of signals and mode signals to indicate occurrence of transmission basis signals for transmitting the stream of the source packets, and outputting the transmission basis signals; and
(2) receiving the transmission basis signals and transmitting packets at every cycle sync, according to fixed rules,
wherein the fixed rules specify transmission timing of source packet for a cycle sync in the manner of that when a cycle sync occurs in a transmission basis signal, a source packet with data is transmitted at the cycle sync while when two cycle syncs occur in a transmission basis signal, a source packet with data is transmitted at only one of the two cycle sync and an empty packet without data at the other cycle sync.

11. The method of claim 10, wherein the first set of signals occur after delaying a first signal showing the beginning of the transmission of the first data in a frame of the inner bus in the first device for a fixed length of time.

12. The method of claim 10 or 11, wherein the mode signals show whether the signals are in NTSC mode.

13. The method of claim 10 or 11, wherein the mode signals show whether the signals are in PAL mode.

14. The method of claim 10, 11, 12 or 13, wherein the fixed length of time is 125 µs.

15. The method of claim 11, wherein the delayed time is for filling the memory with a transmission data to buffer the transmission data and determined by operators.

16. The method of any of claims 10 to 15, wherein the cycle of transmission basis signal in the case of NTSC mode has a cycle interval of a frame divided into 250.

17. The method of any of claims 10 to 16, wherein the cycle of transmission basis signal in the case of PAL mode has a cycle interval of a frame divided into 300.

18. The method of any of claims 10 to 17, wherein the transmission specification is IEEE 1394.

## Revendications

1. Dispositif servant à convertir un débit de transfert en une communication de données numériques audio/vidéo, qui transmet un flux de paquets source provenant d'un premier dispositif numérique à un second dispositif numérique en fonction de spécifications de transmission en mode isochrone, le dispositif comprenant un moyen d'alignement servant à décider les positions d'insertion de paquets vides afin de convertir la synchronisation de transmission d'un bus interne dans le premier dispositif numérique en une synchronisation fixe en fonction des spécifications de transmission, le dispositif étant **caractérisé en ce que** le moyen d'alignement comprend :
un simulateur de synchronisation destiné à recevoir un premier ensemble de signaux (F_st_d) et des signaux de mode (MODE) afin d'indiquer l'occurrence de signaux de base de transmission pour transmettre le flux de paquets source et produire en sortie les signaux de base de transmission, et
un dispositif de contrôle de synchronisation de transmission destiné à recevoir les signaux de base de transmission et à transmettre les paquets à chaque synchronisation de cycle se produisant après un intervalle de temps fixe, en fonction de règles fixées,
et dans lequel les règles fixées spécifient la synchronisation de transmission des paquets source pour une synchronisation de cycle de telle sorte que, lorsqu'une synchronisation de cycle se produit dans un intervalle de signal de base de transmission, un paquet source avec des données est transmis à la synchronisation de cycle tandis que, lorsque deux synchronisations de cycle se produisent dans un intervalle de signal de base de transmission, un paquet source avec des données est transmis uniquement à l'une des deux synchronisations de cycle et un paquet vide sans données est transmis à l'autre synchronisation de cycle.

2. Dispositif selon la revendication 1, dans lequel le premier ensemble de signaux (F_st_d) se produit après avoir retardé un premier signal indiquant le début de la transmission des premières données dans une trame du bus interne dans le premier dispositif pendant un intervalle de temps fixe.

3. Dispositif selon la revendication 2, dans lequel les signaux de mode indiquent si les signaux sont en mode NTSC ou non.

4. Dispositif selon la revendication 2 ou 3, dans lequel les signaux de mode indiquent si les signaux sont en mode PAL ou non.

5. Dispositif selon l'une quelconque des revendications 2 à 4, dans lequel l'intervalle de temps fixe est de 125 µs.

6. Dispositif selon la revendication 2 ou l'une quelconque des revendications 3 à 5 lorsqu'elles en dépendent, dans lequel le temps de retard sert à remplir la mémoire avec les données afin de tamponner les données de transmission et est déterminé par les opérateurs.

7. Dispositif selon la revendication 1, dans lequel le cycle du signal de base de transmission en mode NTSC présente un intervalle de cycle d'un cadre divisé en 250.

8. Dispositif selon la revendication 1, dans lequel le cycle de signal de base de transmission en mode PAL présente un intervalle de cycle d'une trame divisé en 300.

9. Dispositif selon l'une quelconque des revendications précédentes, dans lequel la spécification de transmission est IEEE 1394.

10. Procédé servant à convertir un débit de transfert en une communication de données numériques audio/vidéo, qui transmet un flux de paquets source provenant d'un premier dispositif numérique à un second dispositif numérique en fonction de la spécification de transmission en mode isochrone, comprenant les étapes consistant à :
(1) recevoir un premier ensemble de signaux et de signaux de mode afin d'indiquer l'occurrence de signaux de base de transmission afin de transmettre le flux de paquets source, et produire en sortie les signaux de base de transmission ; et
(2) recevoir les signaux de base de transmission et transmettre les paquets à chaque synchronisation de cycle, en fonction de règles fixées,
dans lequel les règles fixées spécifient la synchronisation de transmission de paquet source pour une synchronisation de cycle de telle sorte que, lorsqu'une synchronisation de cycle se produit dans un signal de base de transmission, un paquet source avec des données est transmis à la synchronisation de cycle tandis que, lorsque deux synchronisations de cycle se produisent dans un signal de base de transmission, un paquet source avec des données est transmis uniquement à l'une des deux synchronisations et un paquet vide sans données à l'autre synchronisation de cycle.

11. Procédé selon la revendication 10, dans lequel le premier ensemble de signaux se produit après avoir retardé un premier signal indiquant le début de la transmission des premières données dans une trame du bus interne dans le premier dispositif pendant un intervalle de temps fixe.

12. Procédé selon la revendication 10 ou 11, dans lequel les signaux de mode indiquent si les signaux sont en mode NTSC ou non.

13. Procédé selon la revendication 10 ou 11, dans lequel les signaux de mode indiquent si les signaux sont en mode PAL ou non.

14. Procédé selon la revendication 10, 11, 12 ou 13, dans lequel l'intervalle fixe est de 125 µs.

15. Procédé selon la revendication 11, dans lequel le temps de retard sert à remplir la mémoire avec les données de transmission afin de tamponner les données de transmission et est déterminé par les opérateurs.

16. Procédé selon l'une quelconque des revendications 10 à 15, dans lequel le cycle de signal de base de transmission dans le cas du mode NTSC présente un intervalle de cycle d'une trame divisée en 250.

17. Procédé selon l'une quelconque des revendications 10 à 16, dans lequel le cycle de signal de base de transmission dans le cas du mode PAL présente un intervalle de cycle d'une trame divisé en 300.

18. Procédé selon l'une quelconque des revendications 10 à 17, dans lequel la spécification de transmission est IEEE 1394.

## Patentansprüche

1. Vorrichtung zum Umwandeln einer Datentransferrate bei Übertragung digitaler Audio-/Videodaten, die einen Strom von Quellen-Pakten von einer ersten digitalen Vorrichtung zu einer zweiten digitalen Vorrichtung gemäß Sende-Spezifikationen in lsochronmodus sendet, wobei die Vorrichtung eine Ausrichteinrichtung umfasst, die Einfügepositionen leerer Pakete festlegt, um Sende-Zeitsteuerung eines internen Busses in der ersten digitalen Vorrichtung gemäß Sende-Spezifikationen in eine feste Zeitsteuerung umzuwandeln, wobei die Vorrichtung **dadurch gekennzeichnet, ist, dass** die Ausrichteinrichtung umfasst:
einen Zeitsteuer-Simulator, der eine erste Gruppe von Signalen (F_st_d) und Modussignale (MODE) empfängt, um Auftreten von Sende-Basissignalen zum Senden des Stroms der Quellen-Pakete anzuzeigen, und die Sende-Basissignale ausgibt; und
Sende-Zeitsteuerung, die die Sende-Basissignale empfängt und Pakete gemäß fester Regeln bei jeder Zyklus-Synchronisation sendet, die nach einem festen Zeitabschnitt auftritt,
und wobei die festen Regeln Sende-Zeitsteuerung von Quellen-Paketen für eine Zyklus-Synchronisation so spezifizieren, dass, wenn eine Zyklus-Synchronisation in einem Sende-Basissignal-Intervall auftritt, ein Quellen-Paket mit Daten bei der Zyklus-Synchronisation gesendet wird, während, wenn zwei Zyklus-Synchronisationen in einem Sende-Basissignal-Intervall auftreten, ein Quellen-Paket mit Daten nur bei einer der zwei Zyklus-Synchronisationen gesendet wird und ein leeres Paket ohne Daten bei der anderen Zyklus-Synchronisation gesendet wird.

2. Vorrichtung nach Anspruch 1, wobei die erste Gruppe von Signalen (F_st_d) nach Verzögern eines ersten Signals, das den Beginn des Sendens der ersten Daten in einem Frame des internen Busses in der ersten Vorrichtung zeigt, über einen festen Zeitabschnitt auftritt.

3. Vorrichtung nach Anspruch 2, wobei die Modus-Signale zeigen, ob die Signale im NTSC-Modus sind.

4. Vorrichtung nach Anspruch 2 oder 3. wobei die Modus-Signale zeigen, ob die Signale im PAL-Modus sind.

5. Vorrichtung nach einem der Ansprüche 2 bis 4, wobei der feste Zeitabschnitt 125 Mikrosekunden beträgt.

6. Vorrichtung nach Anspruch 2 oder einem der daran angehängten Ansprüche 3 bis 5, wobei die verzögerte Zeit dazu dient, den Speicher mit Daten zu füllen, um die Sende-Daten zu puffern, und durch Operatoren bestimmt wird.

7. Vorrichtung nach Anspruch 1, wobei der Zyklus von Sende-Basissignalen im NTSC-Modus ein Zyklusintervall eines 250-fach geteilten Rahmens hat.

8. Vorrichtung nach Anspruch 1, wobei der Zyklus von Sende-Basissignalen im PAL-Modus ein Zyklusintervall eines in 300-fach geteilten Rahmens hat.

9. Vorrichtung nach einem der vorangehenden Ansprüche, wobei die Sende-Spezifikation IEEE 1394 ist.

10. Verfahren zum Umwandeln einer Datentransferrate bei Übertragung digitaler Audio-/Video-Daten, mit dem ein Strom von Quellen-Paketen gemäß Sende-Spezifikation in Isochronmodus von einer ersten digitalen Vorrichtung zu einer zweiten digitalen Vorrichtung gesendet wird, wobei es die folgenden Schritte umfasst:
(1) Empfangen einer ersten Gruppe von Signalen und von Modus-Signalen, um Auftreten von Sende-Basissignalen anzuzeigen und den Strom der Quellen-Pakete zu senden, und Ausgeben der Sende-Basissignale; und
(2) Empfangen der Sende-Basissignale und Senden von Paketen bei jeder Zyklus-Synchronisation gemäß fester Regeln,
wobei die festen Regeln Sende-Zeitsteuerung von Quellen-Paketen für eine Zyklus-Synchronisation so spezifizieren, dass, wenn eine Zyklus-Synchronisation in einem Sende-Basissignal auftritt, ein Quellen-Paket mit Daten bei der Zyklus-Synchronisation gesendet wird, während, wenn zwei Zyklus-Synchronisationen in einem Sende-Basissignal auftreten, ein Quellen-Paket mit Daten nur bei einer der zwei Zyklus-Synchronisationen gesendet wird und ein leeres Paket ohne Daten bei der anderen Zyklus-Synchronisation gesendet wird.

11. Verfahren nach Anspruch 10, wobei die erste Gruppe von Signalen nach Verzögern eines ersten Signals, das den Beginn des Sendens der ersten Daten in einem Frame des internen Busses in der ersten Vorrichtung zeigt, über einen festen Zeitabschnitt auftritt.

12. Verfahren nach Anspruch 10 oder 11, wobei die Modus-Signale zeigen, ob die Signale im NTSC-Modus sind.

13. Verfahren nach Anspruch 10 oder 11, wobei die Modus-Signale zeigen, ob die Signale im PAL-Modus sind.

14. Verfahren nach Anspruch 10, 11, 12 oder 13, wobei der feste Zeitabschnitt 125 Mikrosekunden beträgt.

15. Verfahren nach Anspruch 11, wobei die verzögerte Zeit dazu dient, den Speicher mit Sende-Daten zu füllen, um die Sende-Daten zu puffern, und durch Operatoren bestimmt wird.

16. Verfahren nach einem der Ansprüche 10 bis 15, wobei der Zyklus des Sende-Basissignals beim NTSC-Modus ein Zyklusintervall eines 250-fach geteilten Rahmens hat.

17. Verfahren nach einem der Ansprüche 10 bis 16, wobei der Zyklus eines Sende-Basissignals bei PAL-Modus ein Zyklusintervall eines 300-fach geteilten Rahmens hat.

18. Verfahren nach einem der Ansprüche 10 bis 17, wobei die Sende-Spezifikation IEEE 1394 ist.
